# EUROPÄISCHE PATENTSCHRIFT

(11) **EP 0 925 428 B1**
(45) Veröffentlichungstag und Bekanntmachung des Hinweises auf die Patenterteilung: **04.12.2002**
(21) Anmeldenummer: 97937548.2
(22) Anmeldetag: 02.08.1997
(51) Int. Cl.: F01M 5/00, F01M 11/03, B01D 35/18

(54) **BAUGRUPPE FÜR EINE VERBRENNUNGSKRAFTMASCHINE**
SUBASSEMBLY FOR AN INTERNAL COMBUSTION ENGINE
SOUS-ENSEMBLE POUR MOTEUR A COMBUSTION INTERNE

(30) Priorität: 04.09.1996 DE 19635777
(43) Veröffentlichungstag der Anmeldung: 30.06.1999
(73) Patentinhaber: FILTERWERK MANN & HUMMEL GmbH, 71631 Ludwigsburg (DE)
(72) Erfinder: JAINEK, Herbert, D-74074 Heilbronn (DE); MESSNER, Karl-Heinz, D-71726 Benningen (DE)
(74) Vertreter: Voth, Gerhard, Dipl.-Ing.
(86) Internationale Anmeldenummer: EP9704220
(87) Internationale Veröffentlichungsnummer: WO98010176

(56) Entgegenhaltungen:
- EP-A- 0 200 809
- WO-A-95/34368
- GB-A- 2 294 091
- GB-A- 2 298 037
- US-A- 4 387 764
- US-A- 5 351 664
- US-A- 5 406 910
- PATENT ABSTRACTS OF JAPAN vol. 018, no. 534 (M-1685), 11.Oktober 1994 & JP 06 185332 A (NIPPONDENSO CO LTD), 5.Juli 1994,

## Beschreibung

Die Erfindung betrifft einen Ölkühler mit Filter für eine Verbrennungskraftmaschine.

Derartige Baugruppen sind z. B. aus der DE-PS 533 732 bekannt, bei der ein Ölfilter mit Kühler für Brennkraftmaschinen derart ausgestaltet ist, dass durch ein doppelwandiges Gehäuse mit einer inneren, beliebige Filtriereinrichtungen enthaltenden Kammer, aus der das gereinigte Öl in die zur Kühlung dienende Außenkammer übertritt.

Weiterhin ist eine derartige Baugruppe bekannt aus der DE-PS 1 020 831, bei der eine Vorrichtung zur Aufbereitung von Öl und Kühlflüssigkeiten bei Brennkraftmaschinen, insbesondere von Schmieröl und Kühlwasser, unter Verwendung eines Ölfilters und eines Kühlflüssigkeitsfilters dargestellt wird, wobei das Gehäuse des Ölfilters mit einem von der Kühlflüssigkeit durchströmten Mantel umgeben ist.

Will man derartige Baugruppen nun in modernen Kraftfahrzeugen oder anderen mit Verbrennungskraftmaschinen betriebenen Apparaturen einsetzen, so ist daran nachteilig, dass die bekannten Baugruppen über große Außenabmessungen verfügen sowie über ein entsprechend hohes Eigengewicht oder, dass die Konstruktion so aufwendig ist, dass sie aus Kostengründen unrealisierbar bleibt.

Die JP-A-06 185 332 beschreibt ein Ölkühlersystem mit einem Filterelement, wobei die Flüssigkeit zunächst den Ölkühler durchströmt und anschließend von dem Filterelement gereinigt wird. Das gereinigte Öl verlässt über eine Mittelbohrung die Einrichtung und strömt zu einem nicht näher dargestellten Verbraucher. Ein Nachteil dieser Einrichtung besteht darin, dass bei Stillstand der Anlage das Öl aus dem Filtergehäuse bzw. dem Kühler nach unten abläuft, bei einem Start der Anlage muss zunächst wieder dieses Öl aufgefüllt werden, bevor das gereinigte Öl zu dem Verbraucher gelangt. Hierdurch können Schäden an dem Verbraucher entstehen.

Die WO 95/34368 beschreibt einen austauschbaren Ölfilter, bei welchem ein Rückschlagventil oder Rücklaufsperrventil vorgesehen ist. Dieses besteht aus einem gummiartigen Bauteil, welches in eine Adapterscheibe des Ölfilters eingeknüpft ist. Solche Formteile sind aufwändig in der Herstellung und erschweren die Montage.

Es ist somit Aufgabe der Erfindung, einen Ölkühler mit Filter der eingangs genannten Art dahingehend zu verbessern, dass eine Baugruppe entsteht, die einfacher zu fertigen und zu montieren, leichter und billiger ist, bei stets sicherem Betrieb.

Erfindungsgemäß wird diese Aufgabe durch die Merkmale des Anspruchs 1 gelöst. Von Vorteil ist hierbei, dass sowohl die Herstellungskosten der einzelnen Funktionseinheiten als auch die Kosten der Endmontage reduziert werden können. Aufgrund der konstruktiven Durchgängigkeit werden Synergien zwischen den verschiedenen Funktionseinheiten erreicht, die zur genannten Kosteneinsparung beitragen. Die Bereitstellung von Modulen für die Endmontage vereinfacht außerdem die Logistik. Der modulare Aufbau der Baueinheit wirkt sich außerdem günstig auf das Recycling der Baugruppen aus. Die Zusammenfassung der Funktionseinheiten zu einem Modul gestattet darüber hinaus ein schnelleres Reagieren auf veränderte Marketingkonzepte.

Die Erfindung sieht in vorteilhafter Weise vor, dass ein Rückschlagventil eine in etwa ringförmige gummielastische Scheibe (5) umfasst. Eine derartige Ausführung spart im Vergleich zu bekannten Ausführungsformen einiges an Bauhöhe ein.

Die Scheibe des Rückschlagventils ist vom Schlauch gestochen, wodurch sie im Vergleich zu gespritzten Varianten billiger wird.

In einer vorteilhaften Weiterbildung der Erfindung ist vorgesehen, dass der Ölkühler ein Gegenstromkühler ist, da diese Bauart bei der oben beschriebenen Integration ein Leistungs- bzw. Austauschoptimum, bezogen auf die räumlichen Abmessungen, garantiert.

Eine vorteilhafte Weiterbildung der Erfindung sieht vor, dass das Modul mit weiteren Bauteilen erweiterbar ist. Denkbar wäre beispielsweise, die Integration aller Strömungsführungs-Elemente in dieses Modul einzubinden, wie z. B. Öl- und Kühlwasserschläuche.

Vorteilhafterweise kann vorgesehen werden, dass das Modul als weiteres Bauteil wenigstens ein Umgehungsventil umfasst, was ebenfalls zu einer Erhöhung der Integrationsdichte der Baugruppe beiträgt.

In einer anderen vorteilhaften Weiterbildung der Erfindung ist vorgesehen, dass das Gehäuse des Ölkühlers als Trägerkörper des Moduls wirkt, mittels dessen das Modul mit der Verbrennungskraftmaschine verbindbar ist, da es über eine gewisse Grundfestigkeit verfügt.

Eine vorteilhafte Weiterbildung der Erfindung sieht vor, dass wenigstens ein Bauteil des Moduls aus Kunststoff besteht. Selbst die komplette Ausführung des Moduls und seiner Bauteile aus Kunststoff ist denkbar, wobei die Ausrüstung des Kunststoffs in der Weise erfolgt, dass er insbesondere im Bereich der Kühlrippe wärmeleitend ist. Die Ausführung des Moduls in Kunststoff führt zwangsläufig zu Kosteneinsparungen und Gewichtsreduzierungen sowie in der Folge zu einem niedrigeren Kraftstoffverbrauch der Verbrennungskraftmaschine im Betrieb.

Diese und weitere Merkmale von bevorzugten Weiterbildungen der Erfindung gehen außer aus den Ansprüchen auch aus der Beschreibung und den Zeichnungen hervor. Es zeigen:
- Figur 1: einen Schnitt durch eine Baugruppe mit mäandrierendem Kühler entlang der Linie A - A aus Figur 2
- Figur 2: eine Draufsicht auf den Kühler aus Figur 1
- Figur 3: einen Schnitt durch ein Modul mit rohrförmigem Kühler in zwei Varianten
- Figur 4: einen Schnitt durch ein Modul mit plattenförmigem Kühler
- Figur 5: eine Ansicht des Moduls aus Figur 4 von der Verbrennungskraftmaschine aus
- Figur 6: einen Schnitt durch ein Modul mit plattenformigem Kühler
- Figur 7: eine Ansicht des Moduls aus Figur 6 von der Verbrennungskraftmaschine aus
- Figur 8: einen Schnitt durch ein Modul mit seitlich integriertem Kühler
- Figur 9: eine Ansicht des Moduls aus Figur 8 von der Verbrennungskraftmaschine aus

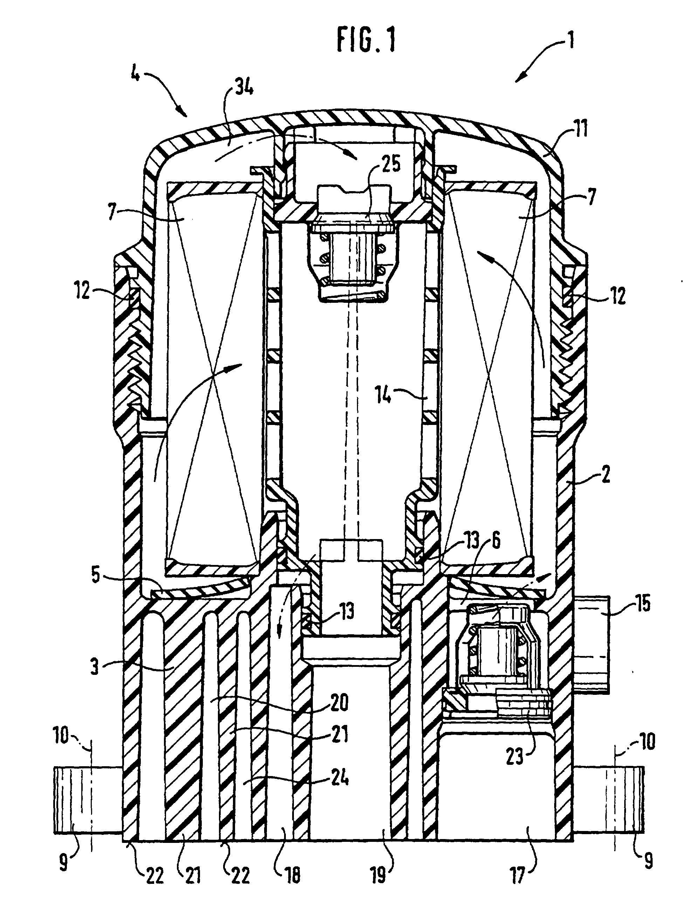

Das Modul 1 besteht aus einem Trägerkörper 2, der in dem in Figur 1 dargestellten Ausführungsbeispiel gleichzeitig das Gehäuse des Ölkühlers 3 als auch das Gehäuse des Filters 4 darstellt. Der Filterinnenraum 34 wird vom Kühlerinnenraum durch die gummielastische Scheibe 5 in der Weise getrennt, daß die Scheibe 5 als Rückschlagventil wirkt. Dabei läßt die Scheibe 5 Öl aus dem Kühler 3 in den Filter 4 strömen, nicht jedoch in umgekehrter Weise. Das aus dem Kühler 3 kommende Öl tritt über die Ölauslaßöffnungen 6, die von der Scheibe 5 elastisch abgedeckt sind und diese zur Seite schieben, in den Filterinnenraum ein. Im Filter 4 befindet sich ein Filtereinsatz 7, der das Öl von Verunreinigungen befreit. Die Baugruppe bzw. das Modul 1 wird mittels Befestigungsösen 9 und Schrauben 10 mit der nicht dargestellten Verbrennungskraftmaschine verbunden. Da im Rahmen von Wartungsintervallen der Filtereinsatz ab und zu gewechselt wird, befindet sich am Modul 1 ein Deckel 11, der mittels Deckeldichtung 12 das Gehäuse dichtend abschließt, wobei im Ausführungsbeispiel gemäß Figur 1 ein Umgehungsventil im Deckel so eingeschnappt installiert ist, daß es mittels des Stützrohres sowohl dieses als auch den Filtereinsatz 7 zentriert und fixiert. Die Stützrohrdichtung 13 dichtet ihrerseits am Stützrohr 14 den Filterinnenraum zum Ölauslaß hin ab. Über den Wassereinlaß 15 gelangt das Kühlmedium in den Ölkühler 3, der als mäandrierender Gegenstromkühler ausgebildet ist. Nachdem das Wasser den Ölkühler 3 durchströmt hat, verläßt es diesen durch Wasserauslaß 16 wieder. Auf der anderen, voneinander abgedichteten Seite des Ölkühlers 3 gelangt das Öl über den Öleinlaß 17 in den Kühler 3 und verläßt diesen, nachdem es den mäanderförmig gestalteten Kühler durchlaufen hat, durch die Ölauslaßöffnungen 6, von denen aus es in den Filterinnenraum gelangt. Nach Passieren des Filtereinsatzes 7, der die Rohöl- von der Reinölseite trennt, gelangt das gereinigte Öl mittels des Ölauslasses 19 zurück in den Schmierölkreislauf der Verbrennungskraftmaschine. Für den Fall, daß zum Zwecke der Wartung der Filtereinsatz 7 ausgewechselt werden soll und sich im Filterinnenraum restliches Öl befindet, so kann dieses Restöl über den Ölablauf 18 in die nicht dargestellte Ölwanne der Verbrennungskraftmaschine zurückfließen.

Der Ölkanal 20 wird von einer Kühlrippe 21, die an ihrer der Verbrennungskraftmaschine zugewandten Seite, eine Dichtfläche 22 aufweist, vom Wasserkanal 24 flüssigkeitsdicht getrennt. Zur garantierten Versorgung der Schmierstellen der Verbrennungskraftmaschine mit Öl, ist das Modul in Figur 1 mit einem Umgehungsventil 23 ausgestattet, das für den Fall, daß das Öl zu zähflüssig sein sollte, um durch den Kühler 3 zu fließen, diesen umgeht und das Öl direkt in den Filterinnenraum 34 strömen läßt. Das Ausführungsbeispiel weist ein weiteres Umgehungsventil 25 auf, das im Falle eines beladenen Filtereinsatzes 7, oder aber wenn das Öl zu zähflüssig ist, um durch den Filtereinsatz 7 hindurchzufließen, diesen umgeht und Öl direkt, also ungefiltert, im Inneren des Stützrohres 14 zum Ölauslaß 19 gelangen läßt.

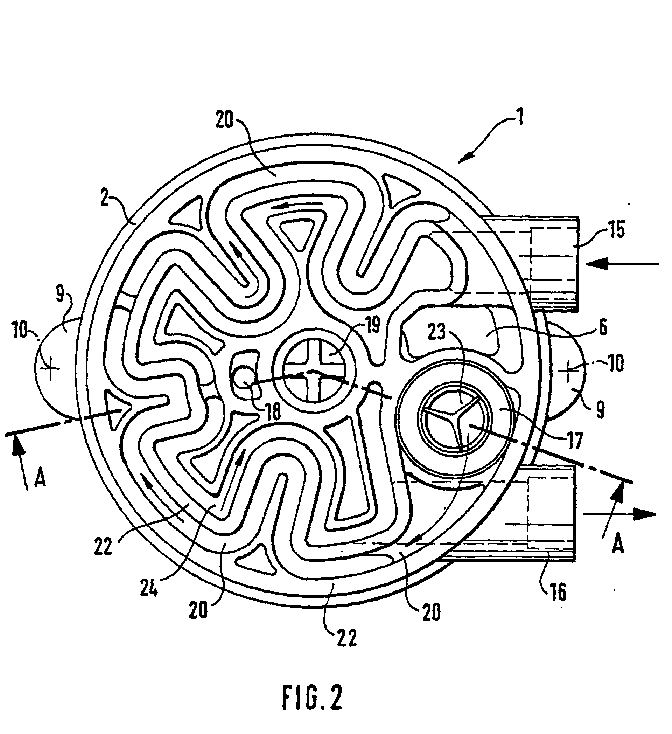

Das in Figur 2 dargestellte Modul 1 umfaßt einen Trägerkörper 2, der das Gehäuse des Ölkühlers 3 als auch das Gehäuse des hier nicht sichtbaren Filters 4 darstellt. Dabei läßt die nicht dargestellte Scheibe Öl aus dem Kühler 3 über die Ölauslaßöffnung 6 in den nicht sichtbaren Filter strömen, nicht jedoch in umgekehrter Weise. Die Baugruppe bzw. das Modul 1 wird mittels Befestigungsösen 9 und Schrauben 10 mit der nicht dargestellten Verbrennungskraftmaschine verbunden. Über den Wassereinlaß 15 gelangt das Kühlmedium in den Ölkühler 3, der als mäandrierender Gegenstromkühler ausgebildet ist. Nachdem das Wasser den Ölkühler 3 im Gegenuhrzeigersinn entlang des in Figur 2 dargestellten Pfeiles durchströmt hat, verläßt es diesen durch Wasserauslaß 16 wieder. Auf der der Kühlrippe 21 gegenüberliegenden voneinander abgedichteten Seite des Ölkühlers 3 gelangt das Öl über den Öleinlaß 17 in den Kühler 3 und verläßt diesen, nachdem es den mäanderförmig gestalteten Kühler im Uhrzeigersinn entlang der Pfeilrichtung durchlaufen hat, durch Ölauslaßöffnungen 6, von denen aus es in den Filterinnenraum 34 gelangt. Nach Passieren des nicht sichtbaren Filtereinsatzes 7 gelangt das gereinigte Öl mittels des Ölauslasses 19 zurück in den Schmierölkreislauf der Verbrennungskraftmaschine. Für den Fall, daß zum Zwecke der Wartung der Filtereinsatz 7 ausgewechselt werden soll und sich im Filterinnenraum restliches Öl befindet, fließt dieses Restöl über den Ölablauf 18 in die nicht dargestellte Ölwanne der Verbrennungskraftmaschine zurück.
Der Ölkanal 20 wird von einer Kühlrippe 21, die an ihrer der Verbrennungskraftmaschine zugewandten Seite eine Dichtfläche 22 aufweist, vom Wasserkanal 24 flüssigkeitsdicht getrennt. Zur garantierten Versorgung der Schmierstellen der Verbrennungskraftmaschinen mit Öl, ist das Modul in Figur 1 mit einem Umgehungsventil 23 ausgestattet, das für den Fall, daß das Öl zu zähflüssig sein sollte, um durch den Kühler 3 zu fließen, diesen umgeht und das Öl direkt in den Filterinnenraum strömen läßt. Das Ausführungsbeispiel weist ein weiteres Umgehungsventil 25 auf, das im Falle eines beladenen Filtereinsatzes 7, oder aber wenn das Öl zu zähflüssig ist, um durch den Filtereinsatz 7 hindurchzufließen, diesen umgeht und Öl direkt, also ungefiltert, im Inneren des Stützrohres zum Ölauslaß 19 gelangen läßt.

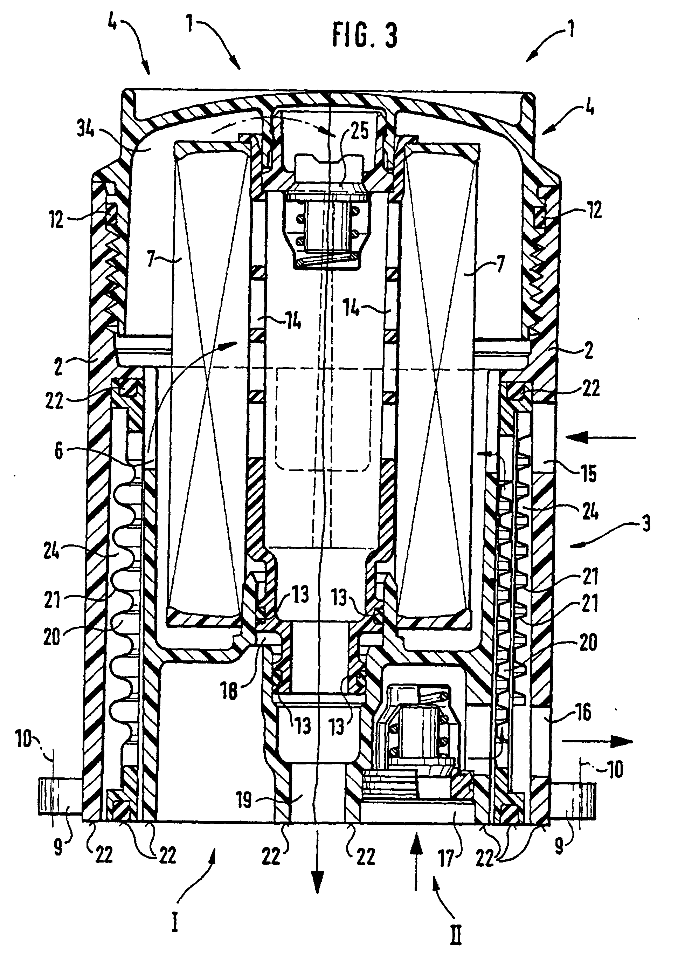

Das Modul 1 besteht aus einem Trägerkörper 2, der in dem in Figur 3 in zwei Varianten dargestellten Ausführungsbeispiel gleichzeitig das Gehäuse des Ölkühlers 3 als auch das Gehäuse des Filters 4 darstellt. Der Kühlerinnenraum der Variante I wird von einem schraubenförmig geprägten Blechrohr, das als Kühlrippe 21 wirkt, getrennt, so daß der Ölund der Wasserkanal im Zusammenwirken mit den Dichtflächen 22, die an beiden Enden des Blechrohres angebracht sind, flüssigkeitsdicht gegeneinander abgedichtet sind. Der Unterschied zur Variante I besteht bei der Variante II in der Ausgestaltung des rohrförmigen Kühlers. Dessen rohrförmig ausgebildetes Kühlblech weist in der Variante II parallel verlaufende Ausprägungen auf, die einerseits die Kühlwirkung verbessern, zum anderen für eine Zwangsströmung sorgen. Ebenfalls wird in der Variante II der Öl- vom Wasserkanal mittels des rohrförmigen Bleches und der an beiden Enden des Kühlbleches montierten Dichtflächen 22 flüssigkeitsdicht getrennt. Das aus dem Kühler 3 kommende Öl tritt über die Ölauslaßöffnung 6 in den Filterinnenraum 34 ein. Im Filter 4 befindet sich ein Filtereinsatz 7, der das Öl von Verunreinigungen befreit. Die Baugruppe bzw. das Modul 1 wird mittels Befestigungsösen 9 und Schrauben 10 mit der nicht dargestellten Verbrennungskraftmaschine verbunden. Da im Rahmen von Wartungsintervallen der Filtereinsatz ab und zu gewechselt wird, befindet sich am Modul 1 ein Deckel 11, der mittels Deckeldichtung 12 das Gehäuse dichtend abschließt, wobei im Ausführungsbeispiel gemäß Figur 3 in beiden Varianten I und II ein Umgehungsventil im Deckel so eingeschnappt installiert ist; daß es mittels des Stützrohres sowohl dieses als auch den Filtereinsatz 7 zentriert und fixiert. Die Stützrohrdichtung 13 dichtet ihrerseits am Stützrohr 14 den Filterinnenraum zum Ölauslaß hin ab. Über den Wassereinlaß 15 gelangt das Kühlmedium in den Ölkühler 3, der, wie bereits oben beschrieben, als rohrförmiger Gegenstromkühler ausgebildet ist. Nachdem das Wasser den Ölkühler 3 durchströmt hat, verläßt es diesen wieder durch Wasserauslaß 16. Auf der anderen Seite des Kühlerblechs des Ölkühlers 3 gelangt das Öl über den Öleinlaß 17 in den Kühler 3 und verläßt diesen, nachdem es den rohrförmig gestalteten Kühler durchlaufen hat, durch Ölauslaßöffhungen 6, von denen aus es in den Filterinnenraum 34 gelangt. Nach Passieren des Filtereinsatzes 7, der die Rohöl- von der Reinölseite trennt, gelangt das gereinigte Öl mittels des Ölauslasses 19 zurück in den Schmierölkreislauf der Verbrennungskraftmaschine. Für den Fall, daß zum Zwecke der Wartung der Filtereinsatz 7 ausgewechselt werden soll und sich im Filterinnenraum restliches Öl befindet, so kann dieses Restöl über den Ölablauf 18 in die nicht dargestellte Ölwanne der Verbrennungskraftmaschine zurückfließen.
Der Ölkanal 20 wird von einer Kühlrippe 21, die an ihrer der Verbrennungskraftmaschine zugewandten Seite eine Dichtfläche 22 aufweist, vom Wasserkanal 24 flüssigkeitsdicht getrennt. Zur garantierten Versorgung der Schmierstellen der Verbrennungskraftmaschine mit Öl, ist das Modul in Figur 1 mit einem Umgehungsventil 23 ausgestattet, das für den Fall, daß das Öl zu zähflüssig sein sollte, um durch den Kühler 3 zu fließen, diesen umgeht und das Öl direkt in den Filterinnenraum strömen läßt. Das Ausführungsbeispiel weist ein weiteres Umgehungsventil 25 auf, das im Falle eines beladenen Filtereinsatzes 7, oder aber wenn das Öl zu zähflüssig ist, um durch den Filtereinsatz 7 hindurchzufließen, diesen umgeht und Öl direkt, also ungefiltert, ins innere des Stützrohres 14 und somit zum Ölauslaß 19 gelangen läßt.

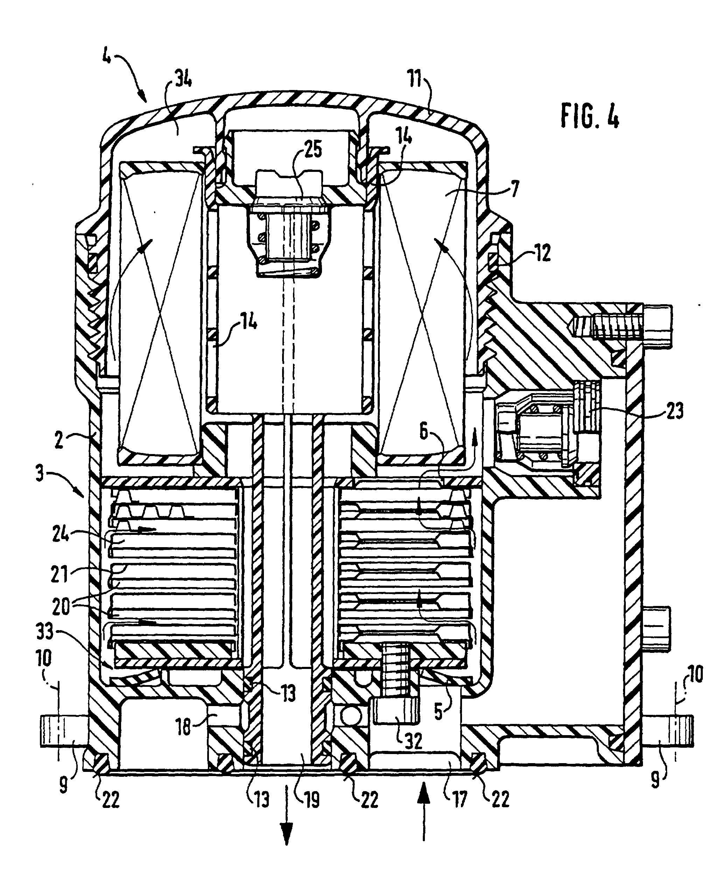

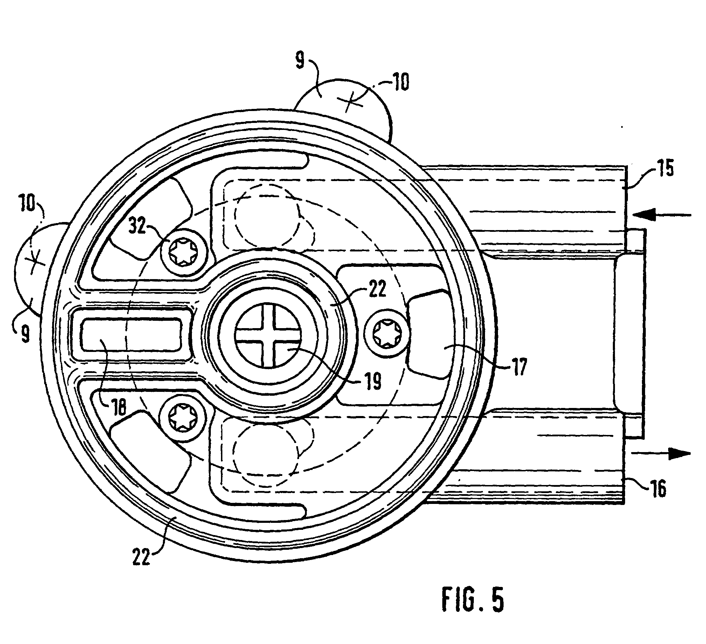

Das Modul 1 besteht aus einem Trägerkörper 2, der in dem in Figur 4 dargestellten Ausführungsbeispiel gleichzeitig das Gehäuse des Ölkühlers 3 als auch das Gehäuse des Filters 4 darstellt. Der Kühlerinnenraum 33 wird durch die gummielastische Scheibe 5 in der Weise vom Ölsumpf getrennt, daß die Scheibe 5 als Rückschlagventil wirkt. Dabei läßt die Scheibe 5 Öl aus dem Ölsumpf in den Kühler 3 strömen, nicht jedoch in umgekehrter Weise. Das aus dem Kühler 3 kommende Öl tritt über die Ölauslaßöffnung 6 in den Filterinnenraum ein. Im Filter 4 befindet sich ein Filtereinsatz 7, der das Öl von Verunreinigungen befreit. Die Baugruppe bzw. das Modul 1 wird mittels Befestigungsösen 9 und Schrauben 10 mit der nicht dargestellten Verbrennungskraftmaschine verbunden, wobei das Modul mittels Dichtflächen 22 zur Verbrennungskraftmaschine hin abgedichtet wird, so daß kein Öl, das vom Ölkreislauf der Verbrennungskraftmaschine zum Modul 1 gelangt, in die Umgebung austreten kann, was in Figur 4 und 5 dargestellt wird. Da im Rahmen von Wartungsintervallen der Filtereinsatz ab und zu gewechselt wird, befindet sich am Modul 1 ein Deckel 11, der mittels Deckeldichtung 12 das Gehäuse dichtend abschließt, wobei im Ausführungsbeispiel gemäß Figur 4 ein Umgehungsventil im Deckel 11 so eingeschnappt installiert ist, daß es mittels des Stützrohres 14 sowohl dieses als auch den Filtereinsatz 7 zentriert und fixiert, überflüssiges Öl fließt über Ölablauf 18 in die Ölwanne zurück . Die Stützrohrdichtung 13 dichtet ihrerseits am Stützrohr 14 den Filterinnenraum zum Ölauslaß 19 hin ab. Über den Wassereinlaß 15, der in Figur 5 dargestellt ist, gelangt das Kühlmedium in den Ölkühler 3, der als plattenförmiger Gegenstromkühler ausgebildet ist, wobei der Wasserkreislauf geschlossen ist und der Ölkreislauf offen ist.

In Figur 4 wird gezeigt, daß jede zweite Kammer des Ölkühlers 3 zum Kühlerinnenraum hin offen ist; dabei handelt es sich um die Ölkanäle 20. Nachdem das Wasser den Ölkühler 3 durch dessen gegen den Kühlerinnenraum 33 geschlossenen Wasserkanal 24 durchströmt hat, verläßt es diesen wieder durch den in Figur 5 dargestellten Wasserauslaß 16. Das Öl gelangt über den Öleinlaß 17 in den Ölkühler 3, der im Modul 1 bzw. dessen Trägerkörper 2 mittels Schrauben 32 befestigt ist, und verläßt diesen, nachdem es den plattenförmig gestalteten Ölkühler 3 durchlaufen hat, durch Ölauslaßöffnungen 6, von denen aus es in den Filterinnenraum gelangt. Nach Passieren des Filtereinsatzes 7, der die Rohöl- von der Reinölseite trennt, gelangt das gereinigte Öl mittels des Ölauslasses 19 zurück in den Schmierölkreislauf der Verbrennungskraftmaschine.
Der Ölkanal 20, der zum Kühlerinnenraum 33 hin offen ist, wird von einer Kühlrippe 21 vom Wasserkanal 24 flüssigkeitsdicht getrennt. Zur garantierten Versorgung der Schmierstellen der Verbrennungskraftmaschine mit Öl, ist das Modul in Figur 4 mit einem Umgehungsventil 23 ausgestattet, das für den Fall, daß das Öl zu zähflüssig sein sollte, um durch den Kühler 3 zu fließen, diesen umgeht und das Öl direkt in den Filterinnenraum 34 strömen läßt. Das Ausführungsbeispiel weist ein weiteres Umgehungsventil 25 auf, das im Falle eines beladenen Filtereinsatzes 7, oder aber wenn das Öl zu zähflüssig ist, um durch den Filtereinsatz 7 hindurchzufließen, diesen umgeht und Öl direkt, also ungefiltert, im Inneren des Stützrohres zum Ölauslaß 19 gelangen läßt.

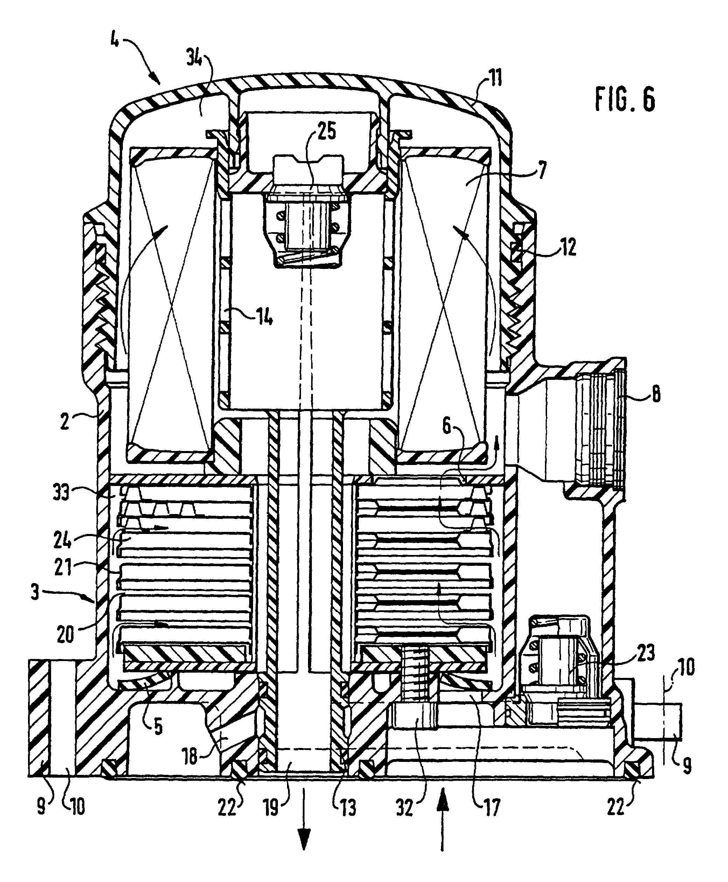

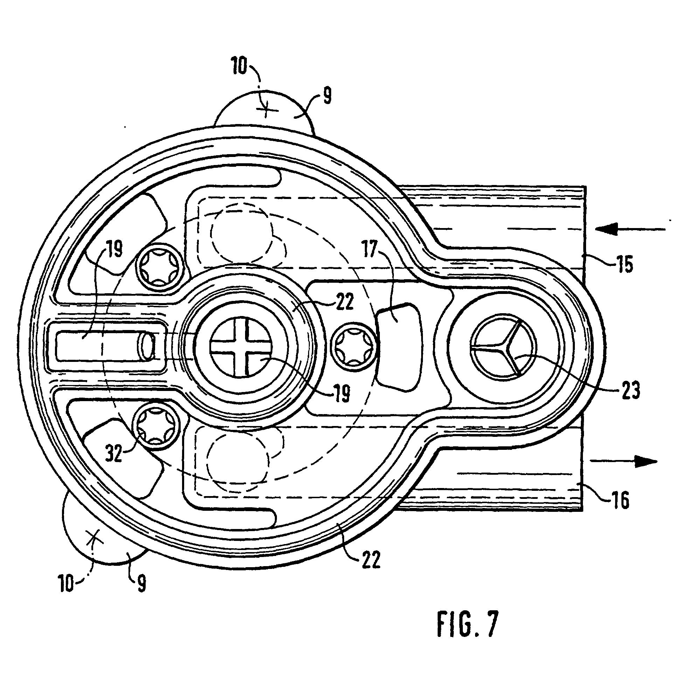

Das Modul 1 besteht aus einem Trägerkörper 2, der in dem in Figur 6 dargestellten Ausführungsbeispiel gleichzeitig das Gehäuse des Ölkühlers 3 als auch das Gehäuse des Filters 4 darstellt. Der Kühlereinsatz wird im Trägerkörper 2 mittels der Schrauben 32 befestigt. Der Kühlerinnenraum 33 wird durch die gummielastische Scheibe 5 in der Weise vom Ölsumpf getrennt, daß die Scheibe 5 als Rückschlagventil wirkt. Dabei läßt die Scheibe 5 Öl aus dem Ölsumpf in den Kühler 3 strömen, nicht jedoch in umgekehrter Weise. Das aus dem Kühler 3 kommende Öl tritt über die Ölauslaßöffnung 6 in den Filterinnenraum ein. Im Filter 4 befindet sich ein Filtereinsatz 7, der das Öl von Verunreinigungen befreit. Im Unterschied zum Ausführungsbeispiel in Figur 4 weist das Beispiel in Figur 6 einen zusätzlichen Rohölanschluß 8 auf, über den mittels des dort befindlichen Gewindes beispielsweise ein weiterer Ölschlauch, der hier nicht extra dargestellt ist, angeschlossen werden kann und, ohne über den Kühler 3 zu laufen, bei Bedarf Öl an den Filter 4 liefert. Die Baugruppe bzw. das Modul 1 wird mittels Befestigungsösen 9 und Schrauben 10 mit der nicht dargestellten Verbrennungskraftmaschine verbunden, wobei das Modul mittels Dichtflächen 22 zur Verbrennungskraftmaschine hin abgedichtet wird, so daß kein Öl, das vom Ölkreislauf der Verbrennungskraftmaschine zum Modul 1 gelangt, in die Umgebung austreten kann, was in den Figuren 6 und 7 zu sehen ist. Da im Rahmen von Wartungsintervallen der Filtereinsatz ab und zu gewechselt wird, befindet sich am Modul 1 ein Deckel 11, der mittels Deckeldichtung 12 das Gehäuse dichtend abschließt, wobei im Ausführungsbeispiel gemäß Figur 6 ein Umgehungsventil im Deckel 11 so eingeschnappt installiert ist, daß es mittels des Stützrohres 14 sowohl dieses als auch den Filtereinsatz 7 zentriert und fixiert; wenn sich im Filterinnenraum restliches Öl befindet, kann dieses Restöl über den Ölablauf 18 in die nicht dargestellte Ölwanne der Verbrennungskraftmaschine zurückfließen.
Die Stützrohrdichtung 13 dichtet ihrerseits am Stützrohr 14 den Filterinnenraum zum Ölauslaß 19 hin ab. Über den in Figur 7 dargestellten Wassereinlaß 15 gelangt das Kühlmedium in den Ölkühler 3, der als plattenförmiger Gegenstromkühler ausgebildet ist, wobei der Wasserkreislauf geschlossen ist und der Ölkreislauf offen ist. In Figur 6 wird gezeigt, daß jede zweite Kammer des Ölkühlers 3 zum Kühlerinnenraum hin offen ist; dabei handelt es sich um die Ölkanäle 20. Nachdem das Wasser den Ölkühler 3 durch dessen gegen den Kühlerinnenraum 33 geschlossenen Wasserkanal 24 durchströmt hat, verläßt es diesen durch den in Figur 7 dargestellten Wasserauslaß 16 wieder. Das Öl gelangt über den Öleinlaß 17 in den Kühler 3 und verläßt diesen, nachdem es den plattenförmig gestalteten Kühler durchlaufen hat, durch Ölauslaßöffnungen 6, von denen aus es in den Filterinnenraum gelangt. Nach Passieren des Filtereinsatzes 7, der die Rohöl- von der Reinölseite trennt, gelangt das gereinigte Öl mittels des Ölauslasses 19 zurück in den Schmierölkreislauf der Verbrennungskraftmaschine. Der Ölkanal 20, der zum Kühlerinnenraum 33 hin offen ist, wird von einer Kühlrippe 21 vom Wasserkanal 24 flüssigkeitsdicht getrennt. Um die Versorgung der Schmierstellen der Verbrennungskraftmaschine mit Öl zu garantieren, ist das Modul in Figur 6 mit einem Umgehungsventil 23 ausgestattet, das für den Fall, daß das Öl zu zähflüssig sein sollte, um durch den Kühler 3 zu fließen, diesen umgeht und das Öl direkt in den Filterinnenraum 34 strömen läßt. Das Ausführungsbeispiel weist ein weiteres Umgehungsventil 25 auf, das im Falle eines beladenen Filtereinsatzes 7, oder aber wenn das Öl zu zähflüssig ist, um durch den Filtereinsatz 7 hindurchzufließen, diesen umgeht und Öl direkt, also ungefiltert, im Inneren des Stützrohres zum Ölauslaß 19 gelangen läßt.

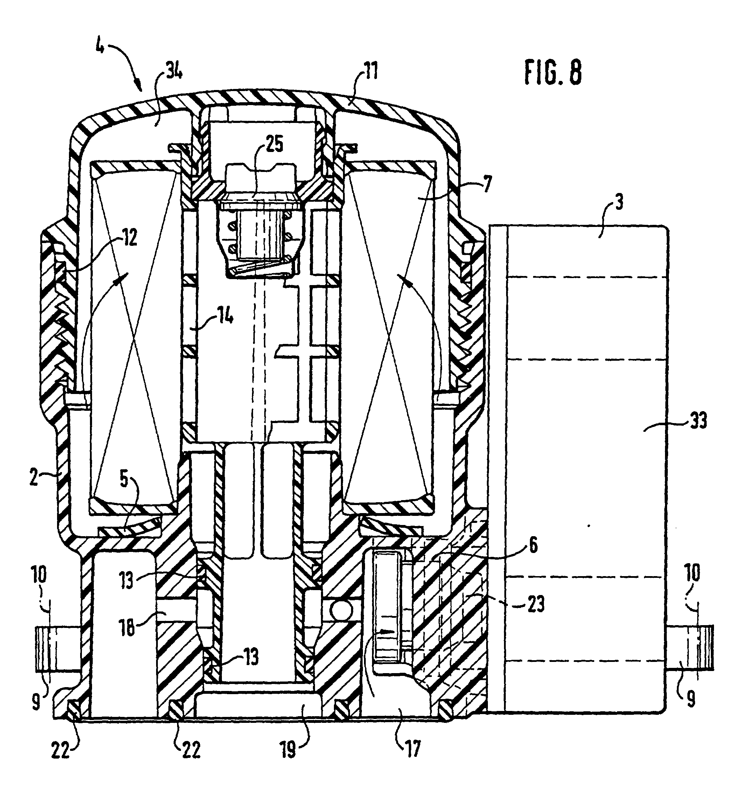

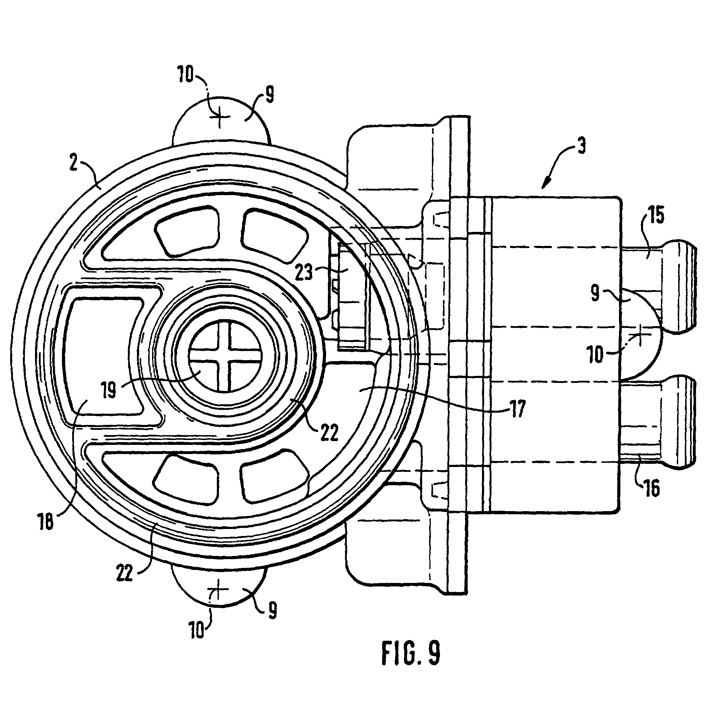

Das Modul 1 besteht aus einem Trägerkörper 2, der in dem in Figur 8 dargestellten Ausführungsbeispiel das Gehäuse des Ölkühlers 3 als auch das Gehäuse des Filters 4 aufnimmt. Der Filterinnenraum wird vom Kühlerinnenraum durch die gummielastische Scheibe 5 in der Weise getrennt, daß die Scheibe 5 als Rückschlagventil wirkt. Dabei läßt die Scheibe 5 Öl aus dem Kühler 3 in den Filter 4 strömen, nicht jedoch in umgekehrter Weise. Das aus dem Kühler 3 kommende Öl tritt über die Ölauslaßöffnung 6, die von der Scheibe 5 elastisch abgedeckt ist und diese zur Seite schiebt, in den Filterinnenraum ein. Im Filter 4 befindet sich ein Filtereinsatz 7, der das Öl von Verunreinigungen befreit. Die Baugruppe bzw. das Modul 1 wird mittels Befestigungsösen 9 und Schrauben 10 mit der nicht dargestellten Verbrennungskraftmaschine verbunden. Da im Rahmen von Wartungsintervallen der Filtereinsatz gewechselt wird, befindet sich am Modul 1 ein Deckel 11, der mittels Deckeldichtung 12 das Gehäuse dichtend abschließt, wobei im Ausführungsbeispiel gemäß Figur 8 ein Umgehungsventil 25 im Deckel 11 so eingeschnappt installiert ist, daß es mittels des Stützrohres sowohl dieses als auch den Filtereinsatz 7 zentriert und fixiert. Die Stützrohrdichtung 13 dichtet ihrerseits am Stützrohr 14 den Filterinnenraum zum Ölauslaß hin ab. Über den in Figur 9 dargestellten Wassereinlaß 15 gelangt das Kühlmedium in den Ölkühler 3, der als plattenförmiger Gegenstromkühler ausgebildet ist, wie er bereits in den Figuren 4 und 6 dargestellt wurde. Nachdem das Wasser den Ölkühler 3 durchströmt hat, verläßt es diesen wieder durch den in Figur 9 gezeigten Wasserauslaß 16. Das Öl gelangt über den Öleinlaß 17 in den Kühler 3 und verläßt diesen, nachdem es den aus den Figuren 4 und 6 bekannten plattenförmig gestalteten Kühler durchlaufen hat, durch Ölauslaßöffnungen 6, von denen aus es in den Filterinnenraum 34 gelangt. Nach Passieren des Filtereinsatzes 7, der die Rohöl- von der Reinölseite trennt, gelangt das gereinigte Öl mittels des Ölauslasses 19 zurück in den Schmierölkreislauf der Verbrennungskraftmaschine. Für den Fall, daß zum Zwecke der Wartung der Filtereinsatz 7 ausgewechselt wird und sich im Filterinnenraum restliches Öl befindet, kann Restöl über den Ölablauf 18 in die nicht dargestellte Ölwanne der Verbrennungskraftmaschine zurückfließen. Der Ölkanal 20 wird von einer Kühlrippe 21, die an ihrer der Verbrennungskraftmaschine zugewandten Seite eine Dichtfläche 22 aufweist, vom Wasserkanal 24 flüssigkeitsdicht getrennt, wie dies in den Figuren 4 und 6 explizit dargestellt wird. Zur garantierten Versorgung der Schmierstellen der Verbrennungskraftmaschine mit Öl, ist das Modul in Figur 8 und 9 mit einem Umgehungsventil 23 ausgestattet, das für den Fall, daß das Öl zu zähflüssig sein sollte, um durch den Kühler 3 zu fließen, diesen umgeht und das Öl direkt in den Filterinnenraum strömen läßt. Das Ausführungsbeispiel gemäß Figur 8 weist ein weiteres Umgehungsventil 25 auf, das im Falle eines beladenen Filtereinsatzes 7, oder aber wenn das Öl zu zähflüssig ist, um durch den Filtereinsatz 7 hindurchzufließen, diesen umgeht und Öl direkt, also ungefiltert, im Inneren des Stützrohres zum Ölauslaß 19 gelangen läßt.

Das in Figur 9 dargestellte Modul 1 umfaßt einen Trägerkörper 2, der das Gehäuse des Ölkühlers 3 als auch das Gehäuse des hier nicht sichtbaren Filters 4 aufnimmt. Dabei läßt die nicht dargestellte Scheibe Öl aus dem Kühler 3 über die Ölauslaßöffilung 6 in den nicht sichtbaren Filter strömen, nicht jedoch in umgekehrter Weise. Die Baugruppe bzw. das Modul 1 wird mittels Befestigungsösen 9 und Schrauben 10 mit der nicht dargestellten Verbrennungskraftmaschine verbunden. Über den Wassereinlaß 15 gelangt das Kühlmedium in den Ölkühler 3. Nachdem das Wasser den Ölkühler 3 durchströmt hat, verläßt es diesen wieder durch den Wasserauslaß 16. Das Öl gelangt über den Öleinlaß 17 in den Kühler 3 und verläßt diesen, nachdem es den plattenförmig gestalteten Kühler im Gegenstrom durchlaufen hat, durch Ölauslaßöffnungen 6, von denen aus es in den Filterinnenraum gelangt. Nach Passieren des nicht sichtbaren Filtereinsatzes 7 gelangt das gereinigte Öl mittels des Ölauslasses 19 zurück in den Schmierölkreislauf der Verbrennungskraftmaschine. Für den Fall, daß zum Zwecke der Wartung der Filtereinsatz 7 ausgewechselt werden soll und sich im Filterinnenraum restliches Öl befindet, fließt dieses Restöl über den Ölablauf 18 in die nicht dargestellte Ölwanne der Verbrennungskraftmaschine zurück.
Die Dichtfläche 22 hindert sowohl Öl als auch Wasser daran, in die Umgebung der Verbrennungskraftmaschine auszutreten. Zur garantierten Versorgung der Schmierstellen der Verbrennungskraftmaschine mit Öl, ist das Modul in Figur 9 mit einem Umgehungsventil 23 ausgestattet, das für den Fall, daß das Öl zu zähflüssig sein sollte, um durch den Kühler 3 zu fließen, diesen umgeht und das Öl direkt in den Filterinnenraum strömen läßt. Das Öl tritt im Inneren des Stützrohres zum Ölauslaß 19 aus und gelangt von dort aus zu den Schmierstellen der Verbrennungskraftmaschine.

## Patentansprüche

1. Ölkühler mit Filter für eine Verbrennungskraftmaschine, wobei die Bauteile zu einem Modul (1) zusammengefasst sind und das Modul mit der Brennkraftmaschine verbunden ist und wobei entweder zwischen Ölkühler und Filter oder zwischen Ölkühler und Ölsumpf im Modul ein Rückschlagventil vorgesehen ist, das eine in etwa ringförmige gummielastische Scheibe umfasst, wobei die Scheibe (5) in der Weise eingespannt und befestigt ist, dass im Rückschlagfall alle Ölauslassöffnungen (6) des Ölkühlers (3) oder des Ölsumpfes abgedeckt sind und wobei die Scheibe (5) vom Schlauch gestochen ist.

2. Ölkühler nach Anspruch 1, **dadurch gekennzeichnet, dass** der Ölkühler (3) ein Gegenstromkühler ist.

3. Ölkühler nach Anspruch 1, **dadurch gekennzeichnet, dass** das Modul (1) mit weiteren Bauteilen erweiterbar ist.

4. Ölkühler nach einem oder mehreren der vorgenannten Ansprüche, **dadurch gekennzeichnet, dass** das Gehäuse des Ölkühlers als Trägerkörper (2) des Moduls (1) wirkt, mittels dessen das Modul (1 ) mit der Verbrennungskraftmaschine verbindbar ist.

5. Ölkühler nach einem oder mehreren der vorgenannten Ansprüche, **dadurch gekennzeichnet, dass** wenigstens ein Bauteil des Moduls (1) aus Kunststoff besteht.

6. Ölkühler nach einem oder mehreren der vorgenannten Ansprüche, **dadurch gekennzeichnet, dass** der Kunststoff wärmeleitfähig ausgerüstet ist.

7. Ölkühler nach einem oder mehreren der vorgenannten Ansprüche, **dadurch gekennzeichnet, dass** die Scheibe (5) kegelig vom Schlauch gestochen ist.

8. Ölkühler nach einem oder mehreren der vorgenannten Ansprüche, **dadurch gekennzeichnet, dass** die Scheibe (5) aus einem heißölbeständigen Elastomer besteht.

9. Ölkühler nach einem oder mehreren der vorgenannten Ansprüche, **dadurch gekennzeichnet, dass** die Scheibe (5) aus heißölbeständigem Silikon-Kautschuk besteht.

## Claims

1. Oil cooler with a filter for an internal combustion engine, wherein the component parts are combined to form a module (1), and the module is connected to the internal combustion engine, and wherein a non-return valve is provided either between the oil cooler and the filter or between the oil cooler and the oil sump in the module, which valve includes a substantially annular, resilient disc, wherein the disc (5) is clamped in position and secured in such a manner that, in the non-return case, all of the oil outlet apertures (6) of the oil cooler (3) or of the oil sump are covered, and wherein the disc (5) has a hose extending therethrough.

2. Oil cooler according to claim 1, **characterised in that** the oil cooler (3) is a counterflow cooler.

3. Oil cooler according to claim 1, **characterised in that** the module (1) is extendable with additional component parts.

4. Oil cooler according to one or more of the above-mentioned claims, **characterised in that** the housing of the oil cooler acts as a support (2) for the module (1), by means of which support the module (1) is connectable to the internal combustion engine.

5. Oil cooler according to one or more of the above-mentioned claims, **characterised in that** at least one component part of the module (1) is formed from plastics material.

6. Oil cooler according to one or more of the above-mentioned claims, **characterised in that** the plastics material is heat-conductive.

7. Oil cooler according to one or more of the above-mentioned claims, **characterised in that** the disc (5) is conically penetrated by the hose.

8. Oil cooler according to one or more of the above-mentioned claims, **characterised in that** the disc (5) is formed from an elastomeric material which is resistant to hot oil.

9. Oil cooler according to one or more of the above-mentioned claims, **characterised in that** the disc (5) is formed from silicone rubber which is resistant to hot oil.

## Revendications

1. Radiateur à huile équipé d'un filtre pour un moteur à combustion interne, les composants étant regroupés en un module (1) et ce module (1) est relié au moteur à combustion interne et un clapet anti-retour est prévu soit entre le radiateur d'huile et le filtre soit entre le radiateur d'huile et la bâche à huile dans le module, ce clapent anti-retour comprenant un disque sensiblement annulaire élastique comme du caoutchouc, le disque (5) étant serré et fixé de façon qu'en cas de retour, tous les orifices de sortie d'huile (6) du radiateur d'huile (3) ou de la bâche à huile soient couverts, le disque (5) étant traversé par le tube.

2. Radiateur à huile selon la revendication 1,
**caractérisé en ce que**
le radiateur d'huile est un radiateur à contre courant.

3. Radiateur à huile selon la revendication 1,
**caractérisé en ce que**
le module (1) peut être complété par d'autres composants.

4. Radiateur à huile selon l'une ou plusieurs des revendications précédentes,
**caractérisé en ce que**
le boîtier du radiateur d'huile constitue l'organe de support (2) du module (1) à l'aide duquel le module (1) peut être relié au moteur à combustion interne.

5. Radiateur à huile selon une ou plusieurs des revendications précédentes,
**caractérisé en ce qu'**
au moins un composant du module (1) est en matière plastique.

6. Radiateur à huile selon une ou plusieurs des revendications précédentes,
**caractérisé en ce que**
la matière plastique est conductrice de chaleur.

7. Radiateur à huile selon l'une ou plusieurs des revendications précédentes,
**caractérisé en ce que**
le disque (5) est traversé suivant une forme de cône par le tube.

8. Radiateur à huile selon l'une ou plusieurs des revendications précédentes,
**caractérisé en ce que**
le disque (5) est en un élastomère résistant à l'huile chaude.

9. Radiateur à huile selon l'une ou plusieurs des revendications précédentes,
**caractérisé en ce que**
le disque (5) est en caoutchouc au silicone, résistant à l'huile chaude.
